# EUROPÄISCHE PATENTSCHRIFT

(11) **EP 3 871 010 B1**
(45) Veröffentlichungstag und Bekanntmachung des Hinweises auf die Patenterteilung: **06.09.2023**
(21) Anmeldenummer: 19786468.9
(22) Anmeldetag: 26.09.2019
(51) Int. Cl.: G01S 19/11

(54) **ORTUNGSVERFAHREN UND -ANORDNUNG FÜR ABGESCHIRMTE RÄUME**
LOCATING METHOD AND LOCATION ARRANGEMENT FOR SHIELDED SPACES
PROCÉDÉ ET DISPOSITIF DE LOCALISATION POUR ESPACES PROTÉGÉS

(30) Priorität: 26.10.2018 DE 102018218326
(43) Veröffentlichungstag der Anmeldung: 01.09.2021
(73) Patentinhaber: Siemens Mobility GmbH, 81739 München (DE)
(72) Erfinder: KENDELBACHER, Detlef, 13129 Berlin (DE); STEIN, Fabrice, 12621 Berlin (DE)
(74) Vertreter: Siemens Patent Attorneys
(86) Internationale Anmeldenummer: PCT/EP2019/075975
(87) Internationale Veröffentlichungsnummer: WO 2020/083600

(56) Entgegenhaltungen:
- EP-A1- 1 739 991
- DE-A1- 10 211 714
- DE-A1-102012 007 205
- DE-A1-102016 013 148
- US-A- 5 812 086
- US-B1- 6 336 076
- WEICHENG ZHANG ET AL: "An improved pseudolite-based indoor positioning system compatible with GNSS", 2016 FOURTH INTERNATIONAL CONFERENCE ON UBIQUITOUS POSITIONING, INDOOR NAVIGATION AND LOCATION BASED SERVICES (UPINLBS), IEEE, 2. November 2016 (2016-11-02), Seiten 43-50, XP033038828, DOI: 10.1109/UPINLBS.2016.7809949 [gefunden am 2017-01-06]

## Beschreibung

Die Erfindung bezieht sich auf ein Verfahren und eine Anordnung zum Erzeugen von Signalen, die einer innerhalb eines abgeschirmten Raumes befindlichen mobilen Ortungseinrichtung eine satellitenbasierte Ortung ermöglichen.

Eine mobile Ortungseinrichtung, die auf der Basis des bekannten globalen Navigationssatellitensystems GPS ("Global Positioning System") arbeitet, braucht, um zuverlässig zu funktionieren, eine freie Sichtverbindung zu mehreren Satelliten. Diese kann im Außenbereich zum Beispiel durch Bäume, Tunnel oder Hochhäuser unterbrochen sein. Für eine Positionsbestimmung im Innenbereich sind aus diesem Grunde spezielle "Indoor"-Systeme bekannt, die beispielsweise auf der Basis von WLAN arbeiten.

Aus Dokument US 5 708 440 A1 ist eine Pseudolith-Übersetzervorrichtung und ein Verfahren zur Verwendung eines Pseudolith-Übersetzers bekannt. In einer Ausführungsform umfasst ein Pseudolith-Übersetzer einen Empfänger, der zum Empfangen von Positionsinformationen mit einer ersten Frequenz eingerichtet ist. Die Positionsinformation wird von einem Pseudolithen übertragen. Die erste Frequenz, mit der die Positionsinformation von dem Pseudolithen übertragen wird, ist eine nicht lizenzierte Frequenz. Ein Frequenzumwandlungsprozessor des Übersetzers wandelt die Positionsinformationen mit der ersten nicht lizenzierten Frequenz in Positionsinformationen mit einer zweiten Frequenz um. Der Übersetzer enthält eine Ausgabeeinheit, die mit dem Frequenzumwandlungsprozessor gekoppelt ist. Die Ausgabeeinheit ist angepasst, um die Positionsinformation mit der zweiten Frequenz an eine Positionsbestimmungsvorrichtung zu übermitteln.

Ein Verfahren zur Innennavigation ist in Dokument US 5 959 575 A1 offenbart und umfasst das Anordnen einer Vielzahl von Boden-Sendeempfängern in der Nähe eines Innenbereichs, durch den navigiert werden soll sowie das Senden eines Pseudo-Satellitensignals von jedem der Bodensendeempfänger. Das Pseudo-Satelitensignal enthält Positionskoordinaten des Bodensendeempfängers und eine zugeordnete PRN-Codesequenz, die auf ein L-Band-Trägersignal mit einer Frequenz moduliert ist, welche etwa einer L1-Frequenz des globalen Positionierungssystems (GPS) entspricht. Das Verfahren umfasst weiterhin das Empfangen der Pseudosatellitensignale mit einer Empfängerschaltung eines mobilen GPS-Empfängers, wobei die Empfängerschaltung eine Codegeneratorschaltung zum Erzeugen interner PRN-Codesequenzen enthält, und umfasst das Vergleichen der internen PRN-Codesequenzen mit PRN-Codesequenzen, die in den Pseudosatellitensignalen enthalten sind, um decodierte Pseudosatellitensignale unter Verwendung einer Decoderschaltung des mobilen GPS-Empfängers abzuleiten. Ferner umfasst das Verfahren das Verarbeiten der decodierten Pseudosatellitensignale unter Verwendung einer Verarbeitungsschaltung des mobilen GPS-Empfängers sowie Ableiten von Positionskoordinaten des mobilen GPS-Empfängers aus den verarbeiteten decodierten Pseudo-Satellitensignalen.

Zur Lokalisierung eines Endgeräts in einem Innenraum unter Verwendung eines Pseudo-GPS-Signalsenders wird in Dokument US 8 791 857 B2 ein von einem künstlichen Satelliten gesendetes GPS-Signal empfangen und ein Taktsignal des künstlichen Satelliten wird aus dem empfangenen GPS-Signal extrahiert, um eine Synchronisation mit dem künstlichen Satelliten durchzuführen. Sobald die Synchronisation mit dem künstlichen Satelliten durchgeführt wurde, wird ein Pseudo-GPS-Signal erzeugt und die Übertragungszeit des Pseudo-GPS-Signals gesteuert. Das GPS-Signal wird von mehreren Sendeantennen basierend auf der gesteuerten Sendezeit an das im Innenraum befindliche Endgerät gesendet, wodurch das im Innenraum befindliche Endgerät seinen Standort verfolgen kann.

Dokument DE 10 2012 007205 A1 betrifft einen Pseudoliten, der eingerichtet ist, um Signale zu erzeugen und auszustrahlen, um eine Position zu bestimmen, die von dem Pseudoliten für einen Empfänger eines globalen Navigationssatellitensystems empfangen werden soll. Die von dem Pseudoliten ausgesendeten Signale werden an die von dem globalen Navigationssatellitensystem emittierte Navigationssignale angepasst.

Ein Verfahren zur Übertragung von Navigationsdaten an Benutzerterminals in einem Satellitennavigationssystem wird in Dokument DE 102 11 714 A1 beschrieben. Es umfasst Navigationssatelliten und Pseudoliten. Innerhalb der Navigationsdaten werden Positionsinformationen für mindestens einen Pseudoliten in Form eines Modells einer Pseudolit-Trajektorie in einem Referenzkoordinatensystem übertragen, wobei hierzu zu sendende Navigationsdaten der Navigationssatelliten angepasst werden.

Dokument EP 1 739 991 A1 beschreibt ein System und Verfahren zum Bestimmen einer Position von mobilen Endgeräten für drahtlose Kommunikation. Eine drahtlose Übertragungsvorrichtung kann ihren Standort unter Verwendung eines satellitengestützten Positionierungssystems wie GPS bestimmen. Basierend auf der Bestimmung können mobile Endgeräte in einem Übertragungsbereich der Übertragungsvorrichtung in einem Mobilfunknetz oder WiFi-Netz mit Positionsdaten versorgt werden, wenn diese das satellitengestützte Positionierungssystem nicht nutzen können.

Der Erfindung liegt die Aufgabe zugrunde, ein Verfahren zum Bereitstellen von Signalen anzugeben, das auch in abgeschirmten Räumen einsetzbar ist, wo keine ausreichende Sichtverbindung zu Satelliten besteht, wie beispielsweise in langgestreckten Bauwerken, überdachten Bahnsteigen, unterirdisch verlaufenden Transportwegen, Tunneln im Erdreich oder Bergen, usw.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass mindestens ein imitierendes Funksignal erzeugt wird, wobei jedes imitierende Funksignal ein Satellitensignal eines fiktiven, real nicht existierenden Satelliten imitiert und fiktive Satellitendaten des fiktiven Satelliten aufweist, mindestens ein modifiziertes Funksignal erzeugt wird, und zwar durch Modifikation eines empfangenen Satellitensignals eines realen Satelliten eines real existierenden Satellitensystems, wobei im Rahmen der Modifikation Satellitendaten des empfangenen Satellitensignals um fiktive Bahn- und/oder Positionsdaten des zumindest einen fiktiven Satelliten ergänzt werden, und das mindestens eine imitierende Funksignal und das mindestens eine modifizierte Funksignal in den abgeschirmten Raum eingespeist werden.

Ein wesentlicher Vorteil des erfindungsgemäßen Verfahrens besteht darin, dass durch die zusätzliche Erzeugung und Verarbeitung imitierender Funksignale fiktiver Satelliten, vorzugsweise solcher, die fiktiv oberhalb des abgeschirmten Raumes angeordnet sind bzw. werden, eine besonders genaue Ortung innerhalb des abgeschirmten Raumes möglich ist. Die letztgenannten Funksignale werden hier als imitierend bezeichnet, da sie Satellitensignale von Satelliten imitieren bzw. nachahmen, die real nicht existieren.

Ein weiterer wesentlicher Vorteil des erfindungsgemäßen Verfahrens besteht darin, dass die Funksignale mehrerer realer Satelliten eines oder mehrerer real existierender Satellitensysteme verwendet werden, so dass eine Ortung auf der Basis dieser Satelliten vor, während und nach dem Eindringen in den abgeschirmten Bereich unterbrechungsfrei oder zumindest nahezu unterbrechungsfrei fortgesetzt werden kann. Besonders vorteilhaft ist in diesem Zusammenhang die erfindungsgemäß vorgesehene Modifikation der "real" empfangenen Funksignale durch Aufnahme der Bahn- und/oder Positionsdaten des zumindest einen fiktiven Satelliten; durch diese erfindungsgemäße Maßnahme wird der mobilen Ortungseinrichtung mitgeteilt, dass es einen weiteren Satelliten (nämlich den fiktiven) gibt, dessen Funksignal zur Ortung verwendet werden kann, so dass eine Berücksichtigung der Satellitendaten dieses fiktiven Satelliten besonders schnell erfolgen kann.

Besonders vorteilhaft ist es, wenn der zumindest eine fiktive Satellit als geostationär und im Zenit des abgeschirmten Raumes angesehen wird, unveränderliche Positionsdaten aufweist und die Satellitendaten des empfangenen Satellitensignals um die zeitlich unveränderlichen Positionsdaten des fiktiven geostationären Satelliten ergänzt werden.

Der oder die fiktiven Satelliten sind virtuelle Satelliten, die real nicht existieren. Der oder die fiktiven Satelliten werden vorzugsweise fiktiv im Zenit oberhalb des abgeschirmten Raumes angeordnet.

Bei einer bevorzugten Ausgestaltung ist vorgesehen, dass für zwei oder mehr Zugänge des abgeschirmten Raumes, insbesondere alle Zugänge, jeweils mindestens ein modifiziertes Funksignal erzeugt wird, und zwar durch Modifikation eines im Bereich des jeweiligen Zugangs empfangenen Satellitensignals eines realen Satelliten des genannten Satellitensystems oder eines anderen real existierenden Satellitensystems, wobei im Rahmen der Modifikation Satellitendaten des empfangenen Satellitensignals jeweils um die fiktiven Bahn- und/oder Positionsdaten des oder der fiktiven Satelliten ergänzt werden.

Die Modifikation des oder der empfangenen Satellitensignale umfasst vorzugsweise die Veränderung von Zeitstempeln der empfangenen Satellitensignale, insbesondere zur Berücksichtigung von Verzögerungen bei der Bildung der modifizierten Funksignale.

Auch ist es von Vorteil, wenn die Modifikation des oder der empfangenen Satellitensignale die Rückdatierung der Zeitstempel um die während der Modifikation auftretende Verzögerung und/oder um eine zusätzliche Laufzeit des jeweiligen Funksignals innerhalb des abgeschirmten Raumes - verglichen mit einer direkten Sichtverbindung zwischen der mobilen Ortungseinrichtung und dem jeweiligen Satelliten ohne Abschirmung durch den abgeschirmten Raum bei gleicher Position - umfasst.

Die modifizierten Funksignale und die imitierenden Funksignale sind vorzugsweise mit dem oder den Satellitensystemen kompatibel. Die mobile Ortungseinrichtung kann bei dieser Ausgestaltung somit auch außerhalb des abgeschirmten Raumes auf der Basis von Signalen dieses oder dieser Satellitensysteme eine Ortung durchführen.

Bei einer weiteren bevorzugten Ausgestaltung ist vorgesehen, dass für zwei oder mehr Zugänge des abgeschirmten Raumes jeweils mindestens ein Satellit des Satellitensystems oder eines anderen real existierenden Satellitensystems ausgewählt wird, der - entlang der Längsachse des Raumes im Bereich des jeweiligen Zugangs gesehen - auf der Längsachse und zumindest innerhalb eines vorgegebenen Kegels um die Längsachse herum liegt und für den jeweiligen Zugang jeweils ein modifiziertes Funksignal auf der Basis des empfangenen Satellitensignals des ausgewählten Satelliten erzeugt wird.

Besonders vorteilhaft ist es, wenn für zwei oder mehr Zugänge des abgeschirmten Raumes jeweils mindestens ein Satellit des Satellitensystems oder eines anderen real existierenden Satellitensystems ausgewählt wird, indem - entlang der Längsachse des Raumes im Bereich des jeweiligen Zugangs gesehen - beginnend mit der jeweiligen Längsachse geprüft wird, ob ein Satellit empfangen wird und im Falle eines Empfangs der jeweilige Satellit für diesen Zugang ausgewählt wird, und andernfalls in einem Kegel, dessen Kegelspitze im Bereich des jeweiligen Zugangs liegt, mit ansteigendem Kegelwinkel nach dem ersten empfangbaren Satelliten des Satellitensystems gesucht wird und nach Auffinden eines empfangbaren Satelliten dieser für diesen Zugang ausgewählt wird, und für den jeweiligen Zugang jeweils ein modifiziertes Funksignal auf der Basis des empfangenen Satellitensignals des ausgewählten Satelliten erzeugt wird.

Die fiktiven Satellitendaten des zumindest einen fiktiven Satelliten werden vorzugsweise derart gewählt, dass sich dieser oberhalb des abgeschirmten Raumes, vorzugsweise in dessen Zenit, befindet und/oder von keinem der Zugänge - vom Rauminneren durch die Öffnung des jeweiligen Zugangs nach außen gesehen - sichtbar wäre.

Das oder die imitierenden Funksignale werden vorzugsweise entlang des abgeschirmten Raumes mit einer oder mehreren im abgeschirmten Raum installierten Antenneneinrichtungen, insbesondere Schlitzantennen, erzeugt.

Auch wird es als vorteilhaft angesehen, wenn für zwei oder mehr Zugänge des abgeschirmten Raumes jeweils ein modifiziertes Funksignal erzeugt wird, das die Bahn- und/oder Positionsdaten des zumindest einen fiktiven Satelliten umfasst, und mit jeweils einer Richtantenne von dem jeweiligen Zugang aus das jeweilige modifizierte Funksignal in den abgeschirmten Raum gesendet wird.

Der abgeschirmte Raum kann beispielsweise ein langgestrecktes Bauwerk, ein überdachter Bahnsteig, ein unterirdisch verlaufender Transportweg, oder ein Tunnel im Erdreich oder Bergen usw. sein.

Der abgeschirmte Raum bildet besonders bevorzugt vorzugsweise einen überirdischen oder unterirdischen Tunnel oder ein überirdisches oder unterirdisches Tunnelsystem. Die Zugänge bei der letztgenannten Variante sind vorzugsweise Tunnelmünder, und die Längsachse des Raumes im Bereich des jeweiligen Tunnelmunds bildet vorzugsweise eine Tunnelachse.

Das real existierende Satellitensystem oder zumindest eines der real existierenden Satellitensysteme ist vorzugsweise ein globales satellitengestütztes Positionsbestimmungssystem, wie beispielsweise GPS oder Galileo.

Die Erfindung bezieht sich außerdem auf eine Anordnung zum Erzeugen von Signalen gemäß Patentanspruch 13.

Bezüglich der Vorteile der erfindungsgemäßen Anordnung sei auf die oben erläuterten Vorteile im Zusammenhang mit dem erfindungsgemäßen Verfahren verwiesen.

Vorteilhaft ist es, wenn die Anordnung zumindest zwei Infrastrukturkomponenten aufweist,
- die jeweils dazu ausgebildet sind, mindestens ein modifiziertes Funksignal zu erzeugen, und zwar durch Modifikation eines empfangenen Satellitensignals eines realen Satelliten eines real existierenden Satellitensystems, wobei im Rahmen der Modifikation Satellitendaten des empfangenen Satellitensignals um fiktive Bahn- und/oder Positionsdaten des zumindest einen fiktiven Satelliten, der sich vorzugsweise fiktiv oberhalb des abgeschirmten Raumes befindet, ergänzt werden, und
- von denen zumindest eine dazu ausgebildet ist, mindestens ein imitierendes Funksignal im Sinne von Patentanspruch 13 zu erzeugen.

Die Anordnung ist vorzugsweise dazu ausgebildet, das oben beschriebene Verfahren auszuführen, so dass alle Merkmale, die oben im Zusammenhang mit dem erfindungsgemäßen Verfahren erläutert worden sind, auch bei der erfindungsgemäßen Anordnung, insbesondere deren Infrastrukturkomponente(n), vorgesehen bzw. implementiert sein können, und zwar softwareseitig und/oder hardwareseitig.

Die Erfindung bezieht sich außerdem auf ein Verfahren zur Bestimmung der Ortsposition einer mobilen GPS-Empfangseinrichtung in einem Tunnel gemäß dem Patentanspruch 15.

Vorteilhafte Ausgestaltungen des letztgenannten Verfahrens weisen vorzugsweise die Merkmale der Patentansprüche 2 bis 12 auf.

Die Erfindung wird nachfolgend anhand von Ausführungsbeispielen näher erläutert; dabei zeigen beispielhaft
- Figur 1: einen Tunnel, der beispielhaft eine Ausrüstungsvariante mit Infrastrukturkomponenten zeigt,
- Figur 2: die für den Tunnel aus Figur 1 benutzten Cross- und Tunnel-Satelliten und
- Figur 3: ein Ausführungsbeispiel mit einem Tunnel, der eine Verzweigung aufweist.

Im Rahmen der weiteren Erläuterungen werden die fiktiven Satelliten auch als "Tunnel"-Satelliten bezeichnet, weil deren Funksignale im Wesentlichen bzw. nur im abgeschirmten Raum (z. B. Tunnel) empfangbar sind. Die realen Satelliten, deren empfangene Satellitensignale durch Modifikation um fiktive Bahn- und/oder Positionsdaten eines oder mehrerer fiktiver Satelliten ergänzt werden, werden nachfolgend auch als "Cross-Satelliten" bezeichnet.

Bevor auf die Figuren im Detail eingegangen wird, folgen zunächst allgemeine Ausführungen zu möglichen Ausführungsvarianten, die nur erläuternd und nicht einschränkend zu verstehen sind; anschließend wird auf die Figuren konkreter eingegangen. Abschließend werden besonders bevorzugte Verfahrensvarianten nochmals stichpunktartig zusammengefasst.

### Allgemeine Ausführungen zu möglichen Ausführungsvarianten

### I. Bevorzugte Infrastruktur:

Für die Durchführung von Ausführungsbeispielen des Verfahrens werden GPS-Signale vorzugsweise mindestens zweier Cross-Satelliten und eines Tunnel-Satelliten im Tunnel bereitgestellt. Dafür wird vorzugsweise eine ortsfeste Infrastruktur vorgesehen, welche die tunnelspezifische GPS-Funkausleuchtung bereitstellt.

In das Verfahren eingebundene Tunnel werden vorzugsweise mit Richtantennen ausgestattet und darüber mit GPS-Funksignalen versorgt. Alternativ oder zusätzlich können kurze Tunnel auch mit Schlitzkabel preisgünstig ausgestattet und versorgt werden.

Tunnel mit mehr als zwei Tunnelmündern, beispielsweise Autotunnel mit Abzweigen, können bei Bedarf mit Richtantennen für jeden Abzweig ausgerüstet werden. Alternativ oder zusätzlich können kurze Abzweige auch mit Schlitzkabel ausgestattet und versorgt werden.

Tunnel mit Kurven werden vorzugsweise in einzelne annähernd geradlinige Tunnelabschnitte eingeteilt, die jeweils separat je Tunnelabschnitt mit Schlitzkabel und/oder Richtantenne ausgerüstet werden.

Auch Kombinationen von Richtantennen und Schlitzkabeln können für verschiedene Abzweige und Tunnelabschnitte eingesetzt werden.

Für einen Tunnel werden neben Schlitzkabel(n) und/oder Richtantenne(n) Infrastrukturkomponenten vorzugsweise bestehend aus mindestens einem GPS-Empfänger, einer rechentechnischen Verarbeitungseinheit und einer GPS-Sendeeinrichtung vorgesehen. Weiterhin kann eine Zeitsynchronisierung im Tunnel vorteilhaft sein, wofür vorteilhaft ein GPS-synchronisierter Oszillator (GPS-disciplined-oscillator - GPSDO) und ein tunnelseitiges Koaxialkabel verwendet werden können.

Die benötigten Infrastrukturkomponenten sind vorzugsweise marktgängig. Die notwendige Signalaufbereitung kann sowohl software- als auch hardwarebasiert erfolgen.

Die Anordnung der Infrastrukturkomponenten dient vorzugsweise der Erzeugung der GPS-Signale, die jeweils in das Schlitzkabel oder die Richtantenne am Übergang des Außenbereichs in einen Tunnel (Tunnelmund) eingespeist werden.

Bei sehr langen Tunneln oder Tunneln mit anspruchsvoller Topologie können innerhalb des Tunnels mehrere Richtantennen mit jeweils eigener Signaleinspeisung vorgesehen werden, um eine angepasste GPS-Ausleuchtung im gesamten Tunnel zu gewährleisten. Darüber hinaus können bei Bedarf Richtkoppler oder Ähnliches zur Einspeisung in Schlitzleiterkabel im Tunnel installiert werden, um die Ausstrahlung richtungsspezifischer GPS-Signale in Tunnel-Abzweige zu unterdrücken, die durch andere richtungsspezifische GPS-Signale versorgt werden.

Die Anordnung der Infrastrukturkomponenten am und im Tunnel kann in unterschiedlicher Form erfolgen. Nachfolgend sind drei typische Beispiele genannt. Der Begriff Tunnelmund steht hierbei stellvertretend für einen Zugang zu einem langgestreckten Bauwerk, der sich annähernd an dessen Längsachse befindet. Über den Tunnelmund werden vorzugsweise die GPS-Signale dem Tunnel zugeführt. Im Falle unterirdischer Bauwerke, wie beispielsweise entlang von U-Bahn Strecken, können Zugänge beispielsweise von oben und in geeigneten Abständen erfolgen.

### a) Erstes Beispiel: Ausrüstung eines Tunnelmundes

Alle Infrastrukturkomponenten werden an einem Tunnelmund untergebracht. Da die Einspeisung der GPS-Signale von beiden Seiten eines Tunnels erfolgt, wird das GPS-Signal für den anderen Tunnelmund beispielsweise mittels eines zusätzlichen Koaxialkabels und bei Bedarf zusätzlicher Verstärker durch den Tunnel geführt und von der Gegenseite in die Richtantenne gespeist. In dieser Variante können Infrastrukturkomponenten eingespart werden, wenn alle GPS-Signale an einem Tunnelmund erzeugt werden.

### b) Zweites Beispiel: Ausrüstung zweier Tunnelmünder

Die Infrastrukturkomponenten werden im Bereich beider Tunnelmünder installiert. Die Signalerzeugung erfolgt dabei individuell an jedem Tunnelmund. An einem Tunnelmund werden die Signale eines Cross-Satelliten und eines Tunnel-Satelliten erzeugt und eingespeist. Am anderen Tunnelmund werden die Signale des zweiten Cross-Satelliten erzeugt und eingespeist. In dieser Anordnung ist der Aufwand an Verkabelung im Tunnel minimal.

### c) Drittes Beispiel: Ausrüstung zweier Tunnelmünder und im Tunnel

Die Infrastrukturkomponenten werden sowohl im Bereich beider Tunnelmünder als auch zusätzlich in der Mitte des Tunnels installiert. An jedem Tunnelmund werden vorzugsweise die richtungsspezifischen Signale eines Cross-Satelliten erzeugt und eingespeist. In der Tunnelmitte wird vorzugsweise das GPS-Signal für den Tunnel-Satelliten erzeugt und eingespeist. In dieser Anordnung wird für die Signalgenerierung des Tunnel-Satelliten vorzugsweise eine zusätzliche hochgenaue Zeitsynchronisierung eingesetzt, die beispielsweise mittels GPSDO Technologie und tunnelseitigem Koaxialkabel bereitgestellt wird.

Falls weitere Einspeisepunkte innerhalb des Tunnels vorteilhaft sind (z. B. infolge zu hoher Kabeldämpfung oder zu gro-ßer Laufzeitunterschiede im Schlitzkabel), werden vorzugsweise zusätzlich neben dem GPS-Signal für den Tunnel-Satelliten auch richtungsspezifische Signale eines oder auch beider Cross-Satelliten erzeugt und richtungsbezogen eingespeist.

Auf mobiler Seite ist vorzugsweise keine zusätzliche Infrastruktur und bei einfachen GPS-Empfängern keine Modifikation erforderlich. Das heißt, dass mit marktüblichen GPS-Empfängern die Ortung im Tunnel möglich wird und der Übergang zwischen Tunnel und Freiraum unterbrechungsfrei erfolgt.

### II. Funktionen der Infrastruktur

Mit der Bereitstellung der streckenseitigen Infrastrukturkomponenten, welche vorzugsweise die nachfolgend beschriebenen Funktionen durchführen, können beliebige Tunnel in einer kostengünstigen Form für die satellitengestützte Navigation erschlossen werden.

Cross-Satelliten sind hier real vorhandene GPS-Satelliten und dienen erstens dem unterbrechungsfreien Übergang zwischen Freiraum und Tunnelbereich und zweitens der Ortung innerhalb des Tunnels.

Tunnel-Satelliten sind fiktive bzw. virtuelle GPS-Satelliten und dienen der Bereitstellung der Daten eines dritten GPS-Satelliten im Tunnel, wodurch eine flächige Positionsbestimmung (nachfolgend "2D position fix" genannt) möglich wird. Die zusätzliche Bestimmung der Höhe (nachfolgend "3D-position-fix" genannt) ist im Tunnel nicht vorgesehen, beziehungsweise würde nur ungenaue Ergebnisse liefern.

In den Infrastrukturkomponenten am Tunnelmund beziehungsweise im Tunnel werden vorzugsweise GPS-Signale für Cross-Satelliten und Tunnel-Satelliten erzeugt und vorzugsweise per Richtantenne in den Tunnel eingespeist. Während die Signale der Cross-Satelliten vorzugsweise von jeder Seite des Tunnels, das heißt mindestens an jedem versorgten Tunnelmund eingespeist werden, ist die Einspeisung von GPS-Signalen des Tunnel-Satelliten in der Regel vorzugsweise nur im Tunnel vorgesehen.

Bei Tunneln mit Kurven oder Abzweigen reicht die Einspeisung von Cross-Satelliten-Signalen per Richtantenne an beiden Tunnelenden oft nicht aus. In diesem Fall werden vorzugsweise für solche Tunnel mehrere Tunnelabschnitte eingerichtet, die jeweils wie ein eigener Tunnel ausgestattet und ausgeleuchtet werden. Dabei werden vorzugsweise in jeden Tunnelabschnitt die Signale von mindestens einem Cross-Satelliten an jedem Ende des Tunnelabschnitts und die Signale eines Tunnel-Satelliten an einer Stelle innerhalb des Tunnelabschnitts eingespeist.

Die Erzeugung der GPS-Daten für Cross- und Tunnel-Satelliten erfolgt vorzugsweise in einer rechentechnischen Verarbeitungseinheit an Hand der aktuell im GPS-Empfänger am Tunnelmund empfangenen GPS-Daten, die hierfür analysiert, selektiert und modifiziert werden. Da der logische Aufbau der GPS-Frames einfach ist und die Übertragungsrate der GPS-Frames relativ niedrig ist, kann die Aufbereitung der GPS-Daten für den Tunnel vorteilhaft mit einem Mikroprozessor oder hardwarebasiert (beispielsweise mittels FGPA "Field Programmable Gate Arrays") erfolgen.

Die einzelnen Schritte der GPS-Signalaufbereitung sind vorzugsweise wie folgt:

### 1) Auswahl Cross-Satellit

Aus den im Orbit aktuell sichtbaren Satelliten werden einer oder mehrere Satelliten dynamisch ausgewählt.

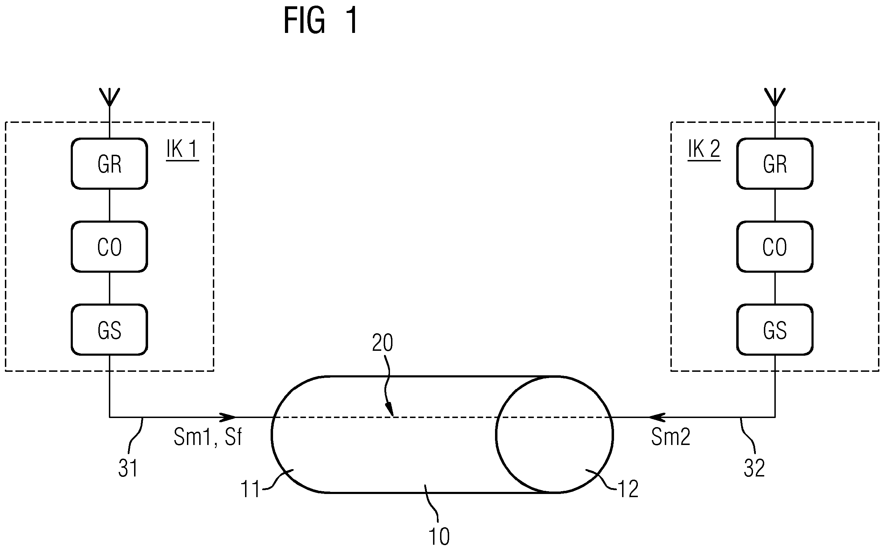

Die Auswahl hängt vorzugsweise von mehreren Faktoren ab (siehe Figur 1):
- Von der topologischen Lage des Tunnels oder Tunnelabschnitts
- Von der aktuellen Stellung der GPS-Satelliten im Orbit
- Von der akzeptierten Fehlertoleranz der GPS-Ortsbestimmung im Tunnel

Die GPS-Funkwellen des Cross-Satelliten am Tunnelmund strahlen am weitesten in den Tunnel hinein.

Für die Selektion eines Cross-Satelliten aus den verfügbaren GPS-Satelliten wird vorteilhaft ein gerader Kegel entlang der Tunnelachse oder Tunnelabschnittsachse gebildet. Die Spitze des Kegels befindet sich am Beginn des Tunnels oder Tunnelabschnitts, während der Kegel im Orbit der GPS-Satelliten endet. Der Öffnungswinkel des Kegels wird nach Bedarf bestimmt. Mit der Größe des Öffnungswinkels des Kegels nimmt die Ungenauigkeit der Ortung im Tunnel zu. Deshalb ist es vorteilhaft, denjenigen sichtbaren GPS-Satelliten als Cross-Satelliten auszuwählen, der sich innerhalb des schmalsten Kegels zur Tunnelachse oder Tunnelabschnittsachse befindet. Idealerweise befindet sich der gesuchte Satellit genau auf oder nahe der Tunnelachse oder Tunnelabschnittsachse.
Die Auswahl von Cross-Satelliten kann auch mit Hilfe der im Internet veröffentlichen Kepplerdaten der GPS-Satelliten vorgenommen werden.

Mit der sich verändernden Stellung der GPS-Satelliten im Orbit ändert sich zeitabhängig auch die Auswahl der Cross-Satelliten. Um den Wechsel von Cross-Satelliten ohne Ortungsunterbrechung im Tunnel zu realisieren, können für einen relativ kurzen Übergangszeitraum (beispielsweise 5 Minuten) vorteilhaft zwei oder mehr Cross-Satelliten je Tunnelseite oder Tunnelabschnittsseite ausgewählt werden (alter und neuer Cross-Satellit). Dadurch haben GPS-Empfänger im Tunnel bei Wechsel von Cross-Satelliten ausreichend Zeit, sich auf neue Cross-Satelliten zu synchronisieren, wodurch ein kurzzeitiger Ausfall der Ortung im Tunnel vermieden wird.

Die Bestimmung der Cross-Satelliten für die Einspeisung in den Tunnel erfolgt vorzugsweise in gleicher Weise auf allen Seiten und Abschnitten eines Tunnels, wodurch im Idealfall zwei GPS-Satelliten auf entgegengesetzten Seiten der Tunnelachse ausgewählt werden.

Durch die geeignete Auswahl der Cross-Satelliten wird bei deren GPS-Empfang im Tunnel keine oder nur eine geringe Winkelabweichung auftreten, wodurch die darauf basierte Ortsbestimmung nur einen geringen Fehler aufweist.

Im Tunnel werden die auf den Daten der Cross-Satelliten basierenden synthetisierten GPS-Signale abgestrahlt. Es werden vorzugsweise keine Signale realer GPS-Satelliten in den Tunnel geleitet.

### 2. Manipulation Bahndaten Cross-Satelliten

Das GPS-Datensignal ist bekanntermaßen in 25 Blöcke (fachsprachlich "frames") unterteilt, die jeweils 1500 Bit lang sind und 30 Sekunden zur Übertragung brauchen. Diese Blöcke sind wiederum in Teilblöcke (subframes) unterteilt (300 Bit; 6 Sekunden lang). Die Teilblöcke 2 und 3 enthalten die Parameter der Ephemeriden. Die Teilblöcke 4 und 5 beinhalten die sogenannten Almanachdaten, die Informationen über die Bahnparameter aller Satelliten, deren Identifikationsnummer und weitere Konfigurationsdaten enthalten. Teilblock 4 enthält die Daten für die Satelliten 25 - 32, Teilblock 5 enthält die Almanachdaten für die Satelliten 1 - 24.

Die Teilblöcke 2 - 5 der empfangenen GPS-Daten der Cross-Satelliten werden vorzugsweise um die Bahndaten (Ephemerie- und Almanachdaten) mindestens eines weiteren virtuellen Satelliten (Tunnel-Satellit) erweitert.

Die Bahndaten der vorhandenen Satelliten in den Teilblöcken 2 - 5 der GPS-Daten der Cross-Satelliten bleiben vorteilhaft unverändert, um die unterbrechungsfreie Re-Synchronisation von GPS-Empfängern beim Übergang vom Tunnel in den Freiraum zu ermöglichen.

Mit dem Einfügen der Bahndaten des Tunnel-Satelliten wird dieser den GPS-Empfängern bei Eintritt in den Tunnel bekannt gemacht. Dadurch können sich GPS-Empfänger im Tunnel schnell auf den Tunnel-Satelliten synchronisieren, wodurch wiederum ein unterbrechungsfreier Übergang zwischen Freiraum und Tunnel möglich wird.

Die aktuellen Bahndaten des Tunnel-Satelliten können vorteilhafterweise als konstante Werte simuliert werden und bilden dadurch einen festen Datensatz, der in die GPS-Frames integriert wird.

### 3. Manipulation Zeitstempel Cross-Satellit

Die Signalverarbeitung in den Infrastrukturkomponenten am Tunnelmund (GPS-Empfänger, rechentechnische Verarbeitungseinheit, GPS-Sendeeinheit mit DA-Wandler) benötigt eine bestimmte Zeitdauer, die bei der Signallaufzeitmessung für die GPS-Ortung im Tunnel nicht vernachlässigt werden sollte. Die gesamte Signalverarbeitungszeit der verwendeten Komponenten wird daher vorzugsweise exakt bestimmt.

Die Synthese der zu simulierenden GPS-Signale erfolgt vorzugsweise mit einem entsprechenden zeitlichen Korrekturoffset.

Das Offset setzt sich vorzugsweise aus folgenden ermittelten oder bekannten Anteilen zusammen:
- Dauer der Signalverarbeitung im GPS-Empfänger
- Dauer der Signalverarbeitung in der rechentechnischen Anordnung
- Dauer der Signalverarbeitung in der GPS-Sendeeinrichtung
- Signallaufzeit von der GPS-Sendeeinrichtung bis zur Einspeisestelle der GPS-Signale des Cross-Satelliten in die Richtantenne oder das Schlitzkabel

Durch das Korrekturoffset messen GPS-Empfänger im Tunnel die korrekten Signallaufzeiten vom GPS-Satelliten bis zum GPS-Empfänger ohne den zusätzlichen Zeitverzug durch die Infrastrukturkomponenten. Die Infrastrukturkomponenten sind dadurch zeittransparent.

### 4. Generierung Tunnelsatellit

Zusätzlich zu den Cross-Satelliten wird im Tunnel vorzugsweise das GPS-Signal mindestens eines virtuellen Tunnel-Satelliten ausgestrahlt. Die GPS-Daten des Tunnel-Satelliten werden vorteilhaft in der rechentechnischen Verarbeitungseinheit an einem Tunnelmund generiert. Die Auswahl des Tunnelmundes und die Einspeisestelle in den Tunnel sind vorzugsweise beliebig.

Die Höhenachse des Tunnel-Satelliten steht vorzugsweise im Zenit des Tunnels.

Weiterhin ist es vorteilhaft, die Tunnelmitte, beziehungsweise die Mitte eines Tunnelabschnitts als Einspeisestelle für Tunnel-Satelliten zu wählen. In dieser Anordnung kann bei Berücksichtigung entsprechender Signallaufzeiten die sprunghafte Änderung der gemessenen Höhe im GPS-Empfänger vermieden werden. Der Höhenverlauf ist somit stetig.

Vorteilhafterweise kann der virtuelle Tunnel-Satellit in fester Position über dem Tunnel stehen, d.h. seine Bahnparameter und Ortskoordinaten sind unveränderlich, wodurch die Generierung der entsprechenden GPS-Daten vereinfacht wird.

Der Tunnel-Satellit enthält vorzugsweise die Identifikationsnummer eines echten GPS-Satelliten. Vorteilhaft ist es, die Identifikationsnummer eines GPS-Satelliten zu vergeben, der aktuell im Orbit nicht sichtbar ist. Dadurch können beim Übergang zwischen Tunnel und Freiraum keine Widersprüche zwischen den Daten echter und virtueller Satelliten entstehen.

Für die Generierung des GPS-Signals des Tunnel-Satelliten wird vorzugsweise eine hochgenaue Uhrzeit verwendet.

Die hochgenaue Uhrzeit kann technisch auf verschiedene Art und Weise bereitgestellt werden.

Beispielsweise kann die Zeit durch eine beim GPS-Empfänger bekanntermaßen vorhandene "GPS disciplined clock" bereitgestellt werden. In diesem Fall werden die aktuellen hochgenauen Referenzsignale für die Generierung der GPS-Daten des Tunnel-Satelliten auf Basis der "GPS disciplined clock" gewonnen.

In einer weiteren vorteilhaften Ausführung werden die Uhren der Infrastrukturkomponenten im Tunnel untereinander synchronisiert. Dieses kann durch ein zusätzlich im Tunnel verlegtes Koaxialkabel und die Verwendung eines GPS-synchronisierten Oszillators erfolgen. Der GPS-synchronisierte Oszillator sendet dazu vorzugsweise ein Taktsignal an die angeschlossenen Infrastrukturkomponenten und hält deren Uhren fortlaufend synchron. In dieser Anordnung kann die Generierung der GPS-Daten des Tunnel-Satelliten auf Basis der fortlaufend synchronisierten Uhren erfolgen.

Um die GPS-Signale des Tunnel-Satelliten aus der aktuellen Uhrzeit herzuleiten, werden vorzugsweise zusätzlich Verarbeitungszeiten in den Komponenten und Signallaufzeiten ermittelt und berücksichtigt:
- Dauer der Signalverarbeitung in der rechentechnischen Anordnung
- Dauer der Signalverarbeitung in der GPS-Sendeeinrichtung
- Dauer der Signalverarbeitung in ggf. verwendeten Repeatern/Verstärkern im Tunnel
- Signallaufzeit zwischen der fiktiven Satellitenposition im Orbit und der 2D-Position im Tunnel
- Signallaufzeit von der GPS-Sendeeinrichtung bis zur Einspeisestelle der GPS-Signale des Tunnel-Satelliten in das Schlitzkabel oder die Richtantenne

Für die Bestimmung der Zeitstempel von Tunnel-Satelliten wird vorzugsweise die aktuelle Zeit um die Summe der Zeiten rückdatiert (konstantes Offset).

Um bei Übergängen zwischen Tunnel und Freiraum sowie zwischen Tunnelabschnitten einen stetigen Verlauf der vom GPS-Empfänger ermittelten Höhenkoordinate zu gewährleisten, ist neben der Einspeisung des Signals der Tunnel-Satelliten in der Tunnelmitte beziehungsweise in der Tunnelabschnittsmitte die Berücksichtigung der Signallaufzeit zwischen Tunnelmitte beziehungsweise Tunnelabschnittsmitte und Tunnelmund beziehungsweise Tunnelabschnittsbeginn vorteilhaft. Diese Signallaufzeit bildet in diesem Fall ein zusätzliches Offset, um welches die Signallaufzeit vom fiktiven Standort des Tunnel-Satelliten im Orbit bis zur Einspeisestelle der GPS-Signale des Tunnel-Satelliten in das Schlitzkabel oder die Richtantenne vermindert wird. Die nicht korrigierte zusätzliche ortsabhängige Signallaufzeit des simulierten Tunnel-Satelliten zum GPS-Empfänger infolge der auftretenden Signallaufzeiten im Schlitzkabel bzw. in Ausbreitungsrichtung von der Richtantenne zum GPS-Empfänger führt bei Zenitposition des Tunnel-Satelliten nur zu Fehlern in der Höhenbestimmung.

Die bei einer realen Tunneldurchfahrt auftretenden Ortungsfehler auf Grund von Abweichungen von der Zenitposition des simulierten Tunnel-Satelliten sind aufgrund des großen Satellitenabstandes bezogen auf die Tunnellänge zu vernachlässigen.

### 5. Erzeugung GPS-Signal

Die Erzeugung des GPS-Signals entspricht vorzugsweise dem GPS-Standard für zivile Anwendungen.

Die rechentechnisch aufbereiteten GPS-Daten für Cross- und Tunnel-Satelliten werden vorzugsweise jeweils mit einer Frequenz von 50 Hz auf den satellitenspezifischen pseudozufälligen PRN-Code (C/A-Code) aufmoduliert (Phasenmodulation). Der für den Tunnel-Satelliten genutzte C/A-Code entspricht vorzugsweise der in Schritt 4 ausgewählten Satelliten-Identifikationsnummer. Der C/A-Code wird vorzugsweise mit einer Frequenz von 1,023 MHz übertragen und auf die GPS L1-Trägerfrequenz (1575,42 MHz) unter Berücksichtigung des oben erwähnten zeitlichen Korrekturoffsets moduliert, wodurch die Signal-Bandbreite auf 2 MHz aufgespreizt wird.

Nach Modulation und Verstärkung wird das GPS-Signal vorzugsweise in das Schlitzkabel oder die Richtantenne am Tunnelmund eingespeist. Die Sendeleistung des GPS-Signals wird vorzugsweise so angepasst, dass im gesamten Tunnelbereich entlang des Schlitzkabels der Signalempfang mit handelsüblichen GPS-Empfängern gewährleistet ist. Um störende Überlagerungen mit GPS-Signalen außerhalb des Tunnels zu vermeiden, sollte die Sendeleistung so gering wie möglich gehalten werden.

### III. Ablauf Ortung

### a) Übergang vom Freiraum in den Tunnel

Bei dem Übergang eines GPS-Empfängers vom Freiraum in den Tunnel verschwinden die Signale der realen GPS-Satelliten. Stattdessen empfängt das GPS-Gerät beispielsweise die vom erwähnten Schlitzkabel ausgestrahlten GPS-Signale, welche mindestens vorzugsweise zwei Cross-Satelliten und einen Tunnel-Satelliten enthalten.

Die Signale der Cross-Satelliten hat der GPS-Empfänger in der Regel bereits im Freiraum vor dem Tunnel empfangen, so dass deren Bahnpositionen bereits bekannt sind und ihre Daten nach Übergang in den Tunnel kontinuierlich (d. h. ohne erneutes Position Fix) ausgewertet werden.

Da die Cross-Satelliten nahe der Tunnelachse stehen, ist auf ihrer alleinigen Basis eine 2D-Ortung auch dann nicht möglich, wenn von jeder Tunnelseite zwei Cross-Satelliten eingespeist werden, da ihre Positionen für eine Triangulation zu eng beieinander liegen.

Die von den simulierten Cross-Satelliten mitgelieferten Bahndaten des Tunnel-Satelliten führen dazu, dass der GPS-Empfänger den Tunnel-Satelliten sucht und schnell findet.

Mit der Synchronisation auf den Tunnel-Satelliten hat der GPS-Empfänger damit drei verwertbare Satellitenpositionen, mit denen ein 2D-position-fix möglich ist.

Beim Übergang vom Freiraum in den Tunnel kann die Ortsermittlung für wenige Sekunden unterbrochen sein, bis die Synchronisation auf den Tunnel-Satelliten erfolgt ist (reaquisition). Ein Neustart (hot start) der Positionsbestimmung, der etwa 15 Sekunden dauert, ist hierfür nicht notwendig. Nach Re-Synchronisation liefert die Positionsbestimmung im GPS-Empfänger korrekte Angaben zum aktuellen Längen- und Breitengrad im Tunnel.

Werden die GPS-Signale des Tunnel-Satelliten am gegenüberliegenden Tunnelmund oder Tunnelabschnittende eingespeist, tritt beim Übergang in den Tunnel oder Tunnelabschnitt ein negativer Sprung der Höhenkoordinate (z-Achse) im GPS-Empfänger auf.

### b) Bewegung im Tunnel

Während der Bewegung des GPS-Empfängers im Tunnel werden die GPS-Signale der Cross-Satelliten und des Tunnel-Satelliten kontinuierlich empfangen. Der GPS-Empfänger liefert somit an jeder Tunnelposition verwertbare Angaben für Längen- und Breitengrad im 2D-position-fix.

Abhängig vom Winkel der aktuell genutzten Cross-Satelliten zur Tunnelachse und vom Verlauf des Tunnels entsteht ein geringer zusätzlicher Ortungsfehler bei der 2D-Positionsbestimmung.

Auch durch die Abweichung der 2D-Position des Tunnel-Satelliten von der aktuellen Position des GPS-Empfängers im Tunnel entsteht ein geringer zusätzlicher Ortungsfehler. Der maximale Fehler ergibt sich aus dem Abstand des GPS-Empfängers vom Speisepunkt des Tunnel-Satelliten geteilt durch den Abstand des Tunnel-Satelliten von der Erdoberfläche (grob x/23.000 km), der auch für sehr lange Tunnel vernachlässigbar ist.

Die Positionsbestimmung im Tunnel ist für beliebige Bewegungsrichtungen und beliebige Zeitdauer möglich. Auch nach dem (Wieder-)Einschalten eines GPS-Empfängers im Tunnel ist eine Ortung im Tunnel möglich.

Mit der Bewegung des GPS-Empfängers in Richtung Einspeisepunkt des Tunnel-Satelliten nimmt der ermittelte Höhenwert entlang der Höhenkoordinate (z-Achse) kontinuierlich zu, während in Gegenrichtung die ermittelte Höhe abnimmt (virtuelle Bewegung nach oben oder unten). Die vom GPS-Empfänger ermittelte Höhe ist demnach nur für eine Abstandsbestimmung zum Speisepunkt des Tunnel-Satelliten nutzbar.

Bei Versorgung eines Tunnels mit einem Tunnel-Satelliten, dessen Signal in der Tunnelmitte unter Berücksichtigung der Signallaufzeit im Tunnel eingespeist wird, kann ein kontinuierlicher Verlauf der Höhenkoordinate vom Übergang in den Tunnel bis zum Übergang in den Freiraum erreicht werden. Bei der Bewegung durch den Tunnel liefert der GPS-Empfänger zwischen den Tunnelmündern eine fiktive Höhenveränderung nach oben oder unten.

Bei Verwendung mehrerer Tunnelabschnitte mit individuellen Tunnel-Satelliten können abhängig von deren Einspeisung mehrere fiktive Auf- und Ab-Bewegungen mit stetigem Höhenverlauf und/oder Höhensprüngen im GPS-Empfänger auftreten.

### c) Übergang vom Tunnel in den Freiraum

Beim Übergang eines GPS-Empfängers vom Tunnel in den Freiraum verschwinden die Signale des Tunnel-Satelliten. Stattdessen empfängt das GPS-Gerät die Signale der GPS-Satelliten im Freiraum, die in der Regel auch die Signale der Cross-Satelliten enthalten.

Die Ortsermittlung kann beim Übergang in den Freiraum für wenige Sekunden unterbrochen sein, bis die Synchronisation auf weitere Freiraum-Satelliten erfolgt ist (reaquisition). Ein Neustart (hot start) der Positionsbestimmung, die etwa 15 Sekunden dauert, ist hierfür nicht notwendig.

Nach erfolgter Re-Synchronisation im Freiraum außerhalb des Tunnels stehen die Positionsdaten im Normalfall wieder mit korrekter Höhenangabe zur Verfügung (3D-position-fix).

Falls das Signal des Tunnel-Satelliten am gegenüberliegenden Tunnelmund eingespeist wird, entsteht ein positiver Sprung der Höhenkoordinate (z-Achse) beim Übergang vom Tunnel in den Freiraum.

### Beschreibung der Ausführungsvarianten im Zusammenhang mit den Figuren:

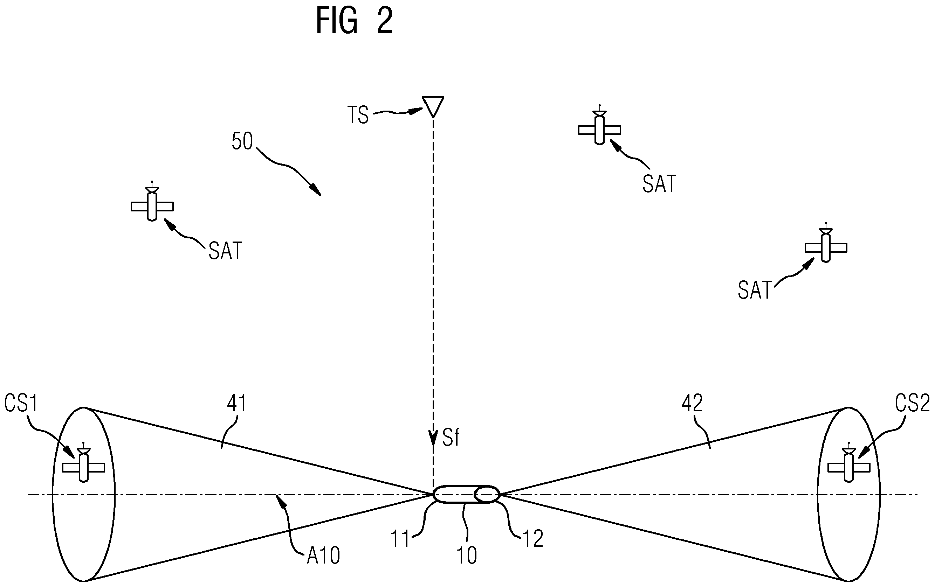

Die Figur 1 zeigt in einer vereinfachten Darstellung einen abgeschirmten Raum in Form eines geraden Tunnels 10, der für das Verfahren vorzugsweise mit einem durchgehenden Schlitzkabel 20 ausgerüstet ist. An beiden Tunnelmündern 11 und 12 werden in das Schlitzkabel 20 modifizierte Funksignale in Form modifizierter GPS-Signale Sm1 und Sm2 eingespeist, die per Koaxialkabel 31 und 32 von den in der Nähe der Tunnelmünder 11 und 12 befindlichen Infrastrukturkomponenten IK1 und IK2 herangeführt werden. In den Infrastrukturkomponenten IK1 und IK2 befindet sich jeweils ein GPS-Empfänger GR, der freie Sicht zu zumindest einigen der in der Figur 2 gezeigten GPS-Satelliten SAT, CS1 und CS2 eines GPS-Satellitensystems 50 hat, eine rechentechnische Verarbeitungseinheit CO und eine GPS-Sendeeinheit GS, die miteinander gekoppelt sind. Der Empfänger GR liefert die GPS-Daten aller sichtbaren GPS-Satelliten an die Verarbeitungseinheit CO. Die Verarbeitungseinheit CO ermittelt den oder die aktuellen Cross-Satelliten CS1 bzw. CS2 und selektiert deren GPS-Daten aus den verfügbaren GPS-Daten. Die in den GPS-Daten der Cross-Satelliten CS1 bzw. CS2 mitgelieferten Bahnparameter weiterer sichtbarer GPS-Satelliten werden um die Bahnparameter des fiktiven, real nicht existenten Tunnel-Satelliten TS (siehe Figur 2), ergänzt. Die Zeitinformation der Cross-Satelliten CS1 und CS2 wird um das Offset für die Verarbeitungsdauer in der Infrastrukturkomponente IK1 bzw. IK2 und der Laufzeit von der Infrastrukturkomponente IK1 bis zum Einspeisepunkt in das Schlitzkabel 20 rückdatiert.

Die Verarbeitungseinheit CO in der Infrastrukturkomponente IK1 generiert zusätzlich die GPS-Daten des fiktiv bzw. virtuell senkrecht über dem Tunnel 10 im Orbit befindlichen Tunnel-Satelliten TS. Die Zeitinformationen für den Tunnel-Satelliten TS werden aus einer GPS-disciplined-clock, die der Empfänger GR in der Infrastrukturkomponente IK1 enthält und deren Uhrzeit laufend für die Verarbeitungseinheit CO zur Verfügung gestellt wird, abgeleitet. Diese berücksichtigen ebenfalls die Verarbeitungszeit in der Infrastrukturkomponente IK1 und die Signallaufzeit des imitierenden Funksignals Sf vom virtuellen Ort des Tunnel-Satelliten TS bis zum Einspeisepunkt des GPS-Signals am Tunnelmund 11. Die von der Verarbeitungseinheit CO vorzugsweise GPS-konform erzeugten Daten werden anschließend in der Sendekomponente GS auf das GPS-Frequenzband moduliert und in das angeschlossene Koaxialkabel 31 eingespeist. Die von der Infrastrukturkomponente IK1 erzeugten Signale sind in der Figur 1 mit dem Bezugszeichen Sm1 für das modifizierte Funkssignal Sm1 des Cross-Satelliten CS1 und mit dem Bezugszeichen Sf für das imitierende Funkssignal des fiktiven Tunnel-Satelliten TS1 bezeichnet.

In der Infrastrukturkomponente IK2 wird lediglich der Cross-Satellit CS2 in entgegengesetzter Richtung der Tunnelachse A10 selektiert und es wird dessen Satellitensignal modifiziert. Abgesehen von der Generierung der Daten des Tunnel-Satelliten TS ist der Ablauf identisch zu dem in der Infrastrukturkomponente IK1. Das von der Infrastrukturkomponente IK2 erzeugte modifizierte Funksignal ist in der Figur 1 mit dem Bezugszeichen Sm2 bezeichnet und bezieht sich also auf den Cross-Satelliten CS2 gemäß Figur 2.

Die in der Figur 2 mit den Bezugszeichen SAT gekennzeichneten weiteren realen Satelliten des GPS-Satellitensystems 50 werden bei dem Ausführungsbeispiel zu dem in den Figuren 1 und 2 gezeigten Zeitpunkt nicht weiter herangezogen.

Die Figur 2 zeigt vereinfacht die symmetrisch um die Tunnelachse A10 des Tunnels 10 aus Figur 1 gebildeten Kegel 41 und 42, innerhalb derer die Cross-Satelliten CS1 und CS2 aus den sichtbaren GPS-Satelliten des GPS-Satellitensystems 50 ausgewählt werden. Am besten geeignet sind dafür die zwei Cross-Satelliten CS1 und CS2, da sich diese nahe der Tunnelachse A10 auf entgegengesetzten Seiten des Tunnels 10 befinden. Der Selektions-Algorithmus in den Verarbeitungseinheiten CO kann die Suche der Cross-Satelliten CS1 und CS2 beispielsweise mit einem sehr spitzwinkligen Kegel beginnen und den Winkel an der Kegelspitze schrittweise vergrößern, bis sich ein GPS-Satellit innerhalb des Kegels befindet.

Weiterhin zeigt die Figur 2 die Position des virtuellen Tunnel-Satelliten TS im Orbit, dessen 2D-Position beispielsweise dem Einspeisepunkt in das Schlitzkabel 20 am linken Tunnelmund 11 entspricht. Diese Position begründet sich durch die gemeinsame Einspeisung der GPS-Signale des Cross- und Tunnel-Satelliten CS1 und TS durch die Infrastrukturkomponente IK1. In diesem Fall ist kein zusätzliches Koaxialkabel erforderlich, um die Signale des Tunnel-Satelliten TS an einer anderen Stelle, vorzugsweise in der Mitte des Tunnels 10 einzuspeisen. Beim Übergang zwischen Freiraum und Tunnel 10 kommt es an der in den Figuren 1 und 2 rechten Tunnelseite zu Sprüngen in der ermittelten Höhe in GPS-Empfängern.

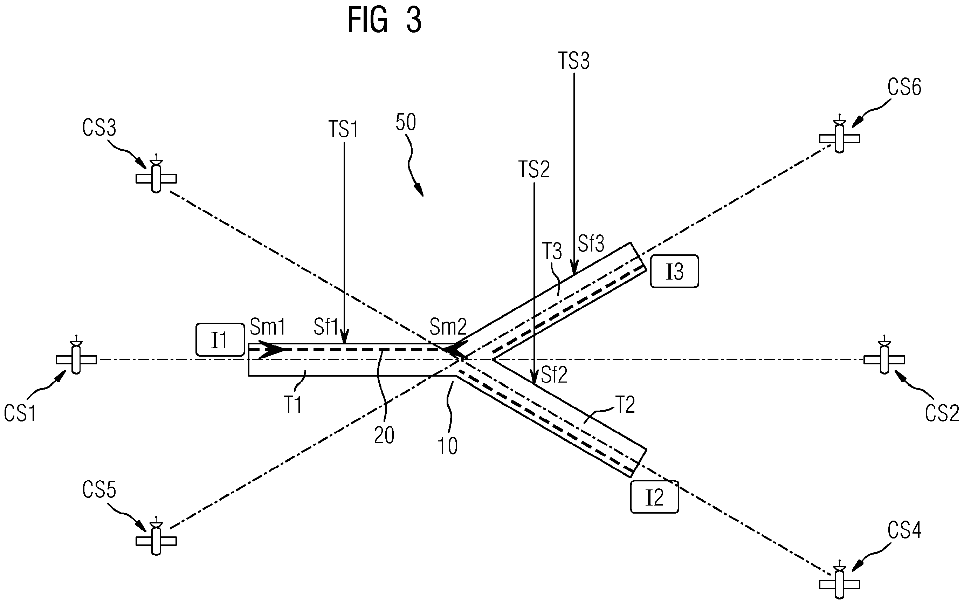

Die Figur 3 zeigt schematisch einen Tunnel 10 mit y-förmiger Gabelung. Um diesen Tunnel mit GPS-Signalen zu versorgen, werden drei Tunnelabschnitte T1, T2 und T3 gebildet. An den drei Tunnelmündern werden jeweils Infrastrukturkomponenten, gekennzeichnet mit I1, I2 und I3, installiert. Die Infrastrukturkomponenten I1, I2 und I3 versorgen jeweils einen kompletten Tunnelabschnitt von beiden Seiten mit GPS-Signalen. Deshalb werden in den Infrastrukturkomponenten I1, I2 und I3 jeweils die Cross-Satelliten für beide Richtungen der Tunnelabschnitte bestimmt. Die Infrastrukturkomponente I1 ermittelt also die Cross-Satelliten CS1 und CS2, die Infrastrukturkomponente I2 ermittelt die Cross-Satelliten CS3 und CS4, und die Infrastrukturkomponente I3 ermittelt die Cross-Satelliten CS5 und CS6.

Für jeden Tunnelabschnitt wird ein eigener fiktiver Tunnel-Satellit TS1, TS2 bzw. TS3 generiert. Die Infrastrukturkomponente I1 generiert den fiktiven Tunnel-Satelliten TS1, die Infrastrukturkomponente I2 generiert den fiktiven Tunnel-Satelliten TS2, und die Infrastrukturkomponente I3 generiert den fiktiven Tunnel-Satelliten TS3. Die Einspeisung der fiktiven Funk- bzw. GPS-Signale Sf1, Sf2 und Sf3 der fiktiven Tunnel-Satelliten TS1, TS2 und TS3 erfolgt in diesem Ausführungsbeispiel nicht gemeinsam mit den modifizierten Funksignalen der ausgewählten Cross-Satelliten. Die imitierenden Funksignale Sf1, Sf2 und Sf3 der fiktiven Tunnel-Satelliten TS1, TS2 und TS3 werden stattdessen jeweils in der Mitte des jeweils zugeordneten Tunnelabschnitts T1, T2 bzw. T3 eingespeist. Die 2D-Position der fiktiven Tunnel-Satelliten TS1, TS2, TS3 ist deshalb jeweils die Tunnelabschnittsmitte des jeweiligen Tunnelabschnitts T1, T2 bzw. T3.

Infolge der Einspeisung der Tunnel-Satelliten in die Tunnelabschnittsmitten ist der Verlauf der Höhe in GPS-Empfängern beim Übergang zwischen Freiraum und Tunnel und beim Übergang zwischen Tunnelabschnitten stetig.

Jeder Tunnelabschnitt T1, T2 und T3 ist vorzugsweise mit einem eigenen Schlitzkabel ausgerüstet. Jedes Schlitzkabel wird vorzugsweise von beiden Enden mit den Signalen jeweils (mindestens) eines richtungsselektiv zugeordneten Cross-Satelliten gespeist. Dazu kann in vorteilhafter Weise ein zusätzliches Koaxialkabel für jeden Tunnelabschnitt vorgesehen werden, mit dem die GPS-Signale zum entfernten Ende des Tunnelabschnitts geführt werden. Beispielsweise wird in das Schlitzkabel 20 des Tunnelabschnitts T1 an dem in der Figur 3 linken Ende das modifizierte Funksignal Sm1 des Cross-Satelliten CS1 und an dem in der Figur 3 rechten Ende das modifizierte Funksignal Sm2 des Cross-Satelliten CS2 eingespeist; Entsprechendes gilt für die anderen Tunnelabschnitte T2 und T3.

Für die Einspeisung der GPS-Signale der Tunnel-Satelliten kann in vorteilhafter Weise jeweils ein weiteres Koaxialkabel von I1, I2 und I3 bis zur jeweiligen Tunnelabschnittsmitte vorgesehen werden.

### Varianten des Verfahrens

Die Anwendung der oben beschriebenen Verfahren ist nicht auf den Schienenfahrzeugverkehr beschränkt. Es können prinzipiell alle Verkehrsmittel, die mit Navigationsgeräten arbeiten und sich dauerhaft oder zeitweise in Bereichen ohne Sichtverbindung zu Satelliten befinden, die beschriebenen Verfahren nutzen und von diesen profitieren. Neben unterirdisch oder oberirdisch in Tunneln verkehrenden Schienenfahrzeugen betrifft das vor allem den motorisierten und nicht-motorisierten Straßenverkehr in Tunneln aller Art. Ebenso kann das Verfahren für die Fußgänger-Navigation verwendet werden.

Alternativ zum GPS-Satellitensystem kann ein anderes globales Navigationssatellitensystem, wie beispielsweise GALILEO verwendet werden. Ebenfalls sind Kombinationen aus mehreren Satellitensystemen denkbar, beispielsweise um Cross-Satelliten immer ausreichend nahe der Tunnelachse zu bestimmen.

Die verwendeten Infrastrukturkomponenten für die Versorgung eines Tunnels mit Satelliten-Funk können flexibel und der Topologie des Tunnels angepasst verwendet werden. So kann die Generierung der GPS-Signale für den Tunnel vorteilhaft mit SDR (software defined radio) Technologie erfolgen. Für die rechentechnische Aufbereitung der GPS-Daten wird in diesem Fall keine zusätzliche rechentechnische Einrichtung benötigt, wodurch Hardwarekomponenten eingespart werden können. GPS-Empfänger mit GPS-disciplined-clock sind eine marktgängige und preiswerte Alternative zu herkömmlichen Präzisionsuhren.

Abhängig von der Topologie, der Länge und den Anforderungen an die Genauigkeit der Ortung im Tunnel kann dessen Funkausleuchtung an die örtlichen Bedürfnisse angepasst werden. So kann ein Tunnel vollständig oder teilweise ausgeleuchtet werden. Es können beliebig viele Tunnelabschnitte mit separater Ausleuchtung gebildet werden. Die Ausleuchtung kann sowohl bezüglich der verwendeten Sendeeinrichtung (Schlitzkabel oder Richtantenne) als auch der Sendeleistung variieren. Weiterhin kann die Funkausbreitung im Tunnel durch Verstärker an die örtlichen Bedürfnisse angepasst werden.

Die Aufbereitung der GPS-Daten für Cross- und Tunnelsatelliten kann variieren. Beispielsweise können die originalen GPS-Sendezeitstempel der Satelliten modifiziert werden, oder es können die Korrekturdaten der Satellitenuhren verändert werden, um die Offsets für die Signalverarbeitung am Tunnel zu berücksichtigen. Weiterhin können sämtliche für den Tunnel benötigten GPS-Signale auch mittels GPSDO Technologie generiert werden.

Die simulierten Positionen der Tunnel-Satelliten können flexibel festgelegt werden und ebenso der Ort der Einspeisung des GPS-Signals im Tunnel.

Die Anzahl der in den Tunnel eingespeisten GPS-Signale von Cross-Satelliten ist flexibel. Jeder Tunnel beziehungsweise jeder Tunnelabschnitt kann in vorteilhafter Weise von beiden Seiten mit den Daten mindestens eines Cross-Satelliten versorgt werden.

Die im Tunnel vom GPS-Empfänger ermittelte Höhenkoordinate kann bei bekanntem Einspeisepunkt des Tunnel-Satelliten zusätzlich zur Plausibilisierung der ermittelten 2D-Koordinaten verwendet werden. Diese Eigenschaft kann vorteilhaft für sicherheitskritische Ortungsanwendungen im Tunnel genutzt werden (ein tunnelspezifischer Höhenalmanach wäre hier vorteilhaft) .

Die oben beispielhaft beschriebene Synthese von GPS-Signalen wurde erfinderseitig bereits erfolgreich erprobt; dabei wurden folgende Komponenten verwendet:
- GPS-Simulationssoftware gps-sdr-sim (git clone https://github.com/osqzss/gps-sdr-sim) zum Generieren von (Basisband)-I/Q-Daten der Fix-Position
- SDR USRP2 der Fa. ETTUS Research zur Frequenzsynthese
- Smartphone HUAWEI Ascend Y200 zum Empfang der simulierten GPS-Daten

Der resultierenden Ortungsfehler lag im Bereich weniger Meter.

Obwohl die Erfindung im Detail durch bevorzugte Ausführungsbeispiele und Ausführungsvarianten näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die unabhängigen Patentansprüche definiert ist.

### Bezugszeichen

- 10: Tunnel
- 11: Tunnelmund
- 12: Tunnelmund
- 20: Schlitzkabel
- 31: Koaxialkabel
- 32: Koaxialkabel
- 41: Kegel
- 42: Kegel
- 50: GPS-Satellitensystem

- A10: Tunnelachse / Längsachse
- CS1: Cross-Satellit
- CS2: Cross-Satellit
- CS3: Cross-Satellit
- CS4: Cross-Satellit
- CS5: Cross-Satellit
- CS6: Cross-Satellit
- GR: GPS-Empfänger
- GS: GPS-Sendeeinheit
- I1: Infrastrukturkomponente
- I2: Infrastrukturkomponente
- I3: Infrastrukturkomponente
- IK1: Infrastrukturkomponente
- IK2: Infrastrukturkomponente
- SAT: GPS-Satellit
- Sf: imitierendes Funk-/GPS-Signal
- Sf1: imitierendes Funk-/GPS-Signal
- Sf2: imitierendes Funk-/GPS-Signal
- Sf3: imitierendes Funk-/GPS-Signal
- Sm1: modifiziertes Funk-/GPS-Signal
- Sm2: modifiziertes Funk-/GPS-Signal
- T1: Tunnelabschnitt
- T2: Tunnelabschnitt
- T3: Tunnelabschnitt
- TS: fiktiver Tunnel-Satellit?
- TS1: fiktiver Tunnel-Satellit
- TS2: fiktiver Tunnel-Satellit
- TS3: fiktiver Tunnel-Satellit

## Patentansprüche

1. Verfahren zum Erzeugen von Signalen, die einer innerhalb eines abgeschirmten Raumes befindlichen mobilen Ortungseinrichtung eine Ortung ermöglichen,
wobei
- mindestens ein imitierendes Funksignal (Sf, Sf1, Sf2, Sf3) erzeugt wird, wobei jedes imitierende Funksignal ein Satellitensignal eines jeweiligen fiktiven, real nicht existierenden Satelliten (TS, TS1, TS2, TS3) imitiert und fiktive Satellitendaten des fiktiven Satelliten (TS, TS1, TS2, TS3) aufweist,
- mindestens ein modifiziertes Funksignal (Sm1, Sm2) erzeugt wird, und zwar durch Modifikation eines empfangenen Satellitensignals eines realen Satelliten (CS1, CS2, CS3, CS4, CS5, CS6) eines real existierenden Satellitensystems (50), wobei im Rahmen der Modifikation Satellitendaten des empfangenen Satellitensignals um fiktive Bahn- und/oder Positionsdaten des zumindest einen fiktiven Satelliten (TS, TS1, TS2, TS3) ergänzt werden, und
- das mindestens eine imitierende Funksignal (Sf, Sf1, Sf2, Sf3) und das mindestens eine modifizierte Funksignal (Sm1, Sm2) in den abgeschirmten Raum eingespeist werden.

2. Verfahren nach Anspruch 1, wobei
- der zumindest eine fiktive Satellit (TS, TS1, TS2, TS3) als geostationär angesehen wird und zeitlich unveränderliche Positionsdaten aufweist und
- die Satellitendaten des empfangenen Satellitensignals um die zeitlich unveränderlichen Positionsdaten des fiktiven geostationären Satelliten (TS, TS1, TS2, TS3) ergänzt werden.

3. Verfahren nach einem der voranstehenden Ansprüche, wobei für zwei oder mehr Zugänge des abgeschirmten Raumes, insbesondere alle Zugänge, jeweils mindestens ein modifiziertes Funksignal (Sm1, Sm2) erzeugt wird, und zwar durch Modifikation eines im Bereich des jeweiligen Zugangs empfangenen Satellitensignals eines realen Satelliten (CS1, CS2, CS3, CS4, CS5, CS6) des genannten Satellitensystems (50) oder eines anderen real existierenden Satellitensystems (50), wobei im Rahmen der Modifikation Satellitendaten des empfangenen Satellitensignals jeweils um die fiktiven Bahn- und/oder Positionsdaten des zumindest einen fiktiven Satelliten (TS, TS1, TS2, TS3) ergänzt werden.

4. Verfahren nach einem der voranstehenden Ansprüche, wobei die Modifikation des oder der empfangenen Satellitensignale die Veränderung von Zeitstempeln der empfangenen Satellitensignale umfasst, insbesondere zur Berücksichtigung von Verzögerungen bei der Bildung der modifizierten Funksignale (Sm1, Sm2) .

5. Verfahren nach einem der voranstehenden Ansprüche, wobei die Modifikation des oder der empfangenen Satellitensignale die Rückdatierung der Zeitstempel um die während der Modifikation auftretende Verzögerung und/oder um eine zusätzliche Laufzeit des jeweiligen Funksignals innerhalb des abgeschirmten Raumes - verglichen mit einer direkten Sichtverbindung zwischen der mobilen Ortungseinrichtung und dem jeweiligen Satelliten ohne Abschirmung durch den abgeschirmten Raum bei gleicher Position - umfasst.

6. Verfahren nach einem der voranstehenden Ansprüche, wobei
- die modifizierten Funksignale und die imitierenden Funksignale (Sf, Sf1, Sf2, Sf3) mit dem oder den Satellitensystemen (50) kompatibel sind und
- die mobile Ortungseinrichtung außerhalb des abgeschirmten Raumes auf der Basis von Signalen dieses oder dieser Satellitensysteme (50) eine Ortung durchführen könnte.

7. Verfahren nach einem der voranstehenden Ansprüche, wobei
- für zwei oder mehr Zugänge des abgeschirmten Raumes jeweils mindestens ein Satellit des Satellitensystems oder eines anderen real existierenden Satellitensystems ausgewählt wird, der - entlang der Längsachse (A10) des Raumes im Bereich des jeweiligen Zugangs gesehen - auf der Längsachse (A10) und zumindest innerhalb eines vorgegebenen Kegels (41, 42) um die Längsachse herum liegt und
- für den jeweiligen Zugang jeweils ein modifiziertes Funksignal (Sm1, Sm2) auf der Basis des empfangenen Satellitensignals des ausgewählten Satelliten erzeugt wird.

8. Verfahren nach einem der voranstehenden Ansprüche, wobei für zwei oder mehr Zugänge des abgeschirmten Raumes jeweils mindestens ein Satellit des Satellitensystems oder eines anderen real existierenden Satellitensystems ausgewählt wird,
- indem - entlang der Längsachse (A10) des Raumes im Bereich des jeweiligen Zugangs gesehen - beginnend mit der jeweiligen Längsachse geprüft wird, ob ein Satellit empfangen wird und im Falle eines Empfangs der jeweilige Satellit für diesen Zugang ausgewählt wird, und
- andernfalls in einem Kegel (41, 42), dessen Kegelspitze im Bereich des jeweiligen Zugangs liegt, mit ansteigendem Kegelwinkel nach dem ersten empfangbaren Satelliten des Satellitensystems gesucht wird und nach Auffinden eines empfangbaren Satelliten dieser für diesen Zugang ausgewählt wird, und
für den jeweiligen Zugang jeweils ein modifiziertes Funksignal (Sm1, Sm2) auf der Basis des empfangenen Satellitensignals des ausgewählten Satelliten erzeugt wird.

9. Verfahren nach einem der voranstehenden Ansprüche, wobei die fiktiven Satellitendaten des zumindest einen fiktiven Satelliten (TS, TS1, TS2, TS3) derart gewählt werden, dass
- sich dieser gemäß den fiktiven Satellitendaten oberhalb des abgeschirmten Raumes befindet, vorzugsweise im Zenit, und/oder
- von keinem der Zugänge - vom Rauminneren durch die Öffnung des jeweiligen Zugangs nach außen gesehen - sichtbar wäre.

10. Verfahren nach einem der voranstehenden Ansprüche, wobei
- das oder die imitierenden Funksignale (Sf, Sf1, Sf2, Sf3) entlang des abgeschirmten Raumes mit einer oder mehreren im abgeschirmten Raum installierten Antenneneinrichtungen, insbesondere Schlitzkabeln (20), erzeugt werden und/oder
- für zwei oder mehr Zugänge des abgeschirmten Raumes jeweils ein modifiziertes Funksignal (Sm1, Sm2) erzeugt wird, das die Bahn- und/oder Positionsdaten des zumindest einen fiktiven Satelliten (TS, TS1, TS2, TS3) umfasst, und mit jeweils einer Richtantenne von dem jeweiligen Zugang aus das jeweilige modifizierte Funksignal (Sm1, Sm2) in den abgeschirmten Raum gesendet wird.

11. Verfahren nach einem der voranstehenden Ansprüche, wobei der abgeschirmte Raum ein Tunnel (10) oder ein Tunnelsystem ist, die Zugänge Tunnelmünder (11, 12) sind und die Längsachse des Raumes im Bereich des jeweiligen Tunnelmunds eine Tunnelachse bildet. U

12. Verfahren nach einem der voranstehenden Ansprüche, wobei
- das Satellitensystem (50) ein globales satellitengestütztes Positionsbestimmungssystem bildet.

13. Anordnung zum Erzeugen von Signalen, die einer innerhalb eines abgeschirmten Raumes befindlichen mobilen Ortungseinrichtung eine Ortung ermöglichen,
wobei die Anordnung mindestens eine Infrastrukturkomponente (IK1, IK2, I1, I2, I3) aufweist,
die dazu ausgebildet ist,
- mindestens ein imitierendes Funksignal (Sf, Sf1, Sf2, Sf3) zu erzeugen, wobei jedes imitierende Funksignal ein Satellitensignal eines jeweiligen fiktiven, real nicht existierenden Satelliten (TS, TS1, TS2, TS3) imitiert und fiktive Satellitendaten des fiktiven Satelliten aufweist, und
- mindestens ein modifiziertes Funksignal (Sm1, Sm2) zu erzeugen, und zwar durch Modifikation eines empfangenen Satellitensignals eines realen Satelliten (CS1, CS2, CS3, CS4, CS5, CS6) eines real existierenden Satellitensystems, wobei im Rahmen der Modifikation Satellitendaten des empfangenen Satellitensignals um fiktive Bahn- und/oder Positionsdaten des zumindest einen fiktiven Satelliten (TS, TS1, TS2, TS3) ergänzt werden.

14. Anordnung nach Anspruch 13, wobei die Anordnung zumindest zwei Infrastrukturkomponenten (IK1, IK2, I1, I2, I3) aufweist,
- die jeweils dazu ausgebildet sind, mindestens ein modifiziertes Funksignal (Sm1, Sm2) zu erzeugen, und zwar durch Modifikation eines empfangenen Satellitensignals eines realen Satelliten (CS1, CS2, CS3, CS4, CS5, CS6) eines real existierenden Satellitensystems (50), wobei im Rahmen der Modifikation Satellitendaten des empfangenen Satellitensignals um fiktive Bahn- und/oder Positionsdaten des zumindest einen fiktiven Satelliten (TS, TS1, TS2, TS3) ergänzt werden, und
- von denen zumindest eine dazu ausgebildet ist, mindestens ein imitierendes Funksignal (Sf, Sf1, Sf2, Sf3) im Sinne von Anspruch 13 zu erzeugen.

15. Verfahren zur Bestimmung der Ortsposition einer mobilen GPS-Empfangseinrichtung in einem Tunnel, nach einem der voranstehenden Ansprüche 1 bis 12, wobei der Tunnel mit funk- und rechentechnischen Komponenten ausgerüstet wird, welche den Tunnel mittels Schlitzkabel und / oder Richtantennen mit speziell generierten GPS-Funksignalen ausleuchten, die
a) den Tunnel (10) von jedem Tunnelmund aus mit den Daten mindestens eines als GPS-Satelliten real vorhandenen Cross-Satelliten versorgen, deren Daten bestimmt werden, indem
- erstens die Auswahl der Cross-Satelliten laufend anhand ihrer Stellung und Richtung zur Tunnelachse erfolgt,
- zweitens die originalen Sendezeitstempel in den Daten der Cross-Satelliten so verändert werden, dass die Verarbeitungszeit in den Komponenten und zusätzliche Signallaufzeiten am Tunnel ausgeglichen werden,
- drittens die im GPS-Signal der Cross-Satelliten mitgelieferten Bahndaten weiterer Satelliten um die Bahndaten mindestens eines als virtuellen Satelliten ausgeführten Tunnel-Satelliten ergänzt werden und
- viertens von jeder Tunnelseite ein seitenindividuell erzeugtes GPS-Signal in den Tunnel gesendet wird,
b) den Tunnel mit GPS-Funksignalen des Tunnel-Satelliten versorgen, dessen Daten bestimmt werden, indem die GPS-Daten eines GPS-Satelliten, der sich virtuell im Zenit über dem Tunnel im Orbit befindet, generiert und mit aktuellen und hochgenauen Sendezeitstempeln versehen werden, welche die Satellitenposition, die Verarbeitungszeit in den Komponenten und zusätzliche Signallaufzeiten im Tunnel berücksichtigen.

## Claims

1. Method for generating signals which enable a positioning by a mobile positioning facility disposed within a shielded space,
wherein
- at least one imitating radio signal (Sf, Sf1, Sf2, Sf3) is generated, wherein each imitating radio signal imitates a satellite signal of a respective fictitious, in reality non-existent satellite (TS, TS1, TS2, TS3) and has fictitious satellite data of the fictitious satellite (TS, TS1, TS2, TS3),
- at least one modified radio signal (Sm1, Sm2) is generated, namely by modifying a received satellite signal of a real satellite (CS1, CS2, CS3, CS3, CS4, CS5, CS6) of a real, existing satellite system (50), wherein within the scope of modification, satellite data of the received satellite signal is extended by fictitious track and positioning data of the at least one fictitious satellite (TS, TS1, TS2, TS3), and
- the at least one imitating radio signal (Sf, Sf1, Sf2, Sf3) and the at least one modified radio signal (Sm1, Sm2) are fed into the shielded space.

2. Method according to claim 1,
wherein
- the at least one fictitious satellite (TS, TS1, TS2, TS3) is considered as geostationary and has temporally unchanging positioning data, and
- the satellite data of the received satellite signal is extended by the temporally unchanging positioning data of the fictitious geostationary satellite (TS, TS1, TS2, TS3) .

3. Method according to one of the preceding claims,
wherein
at least one modified radio signal (Sm1, Sm2) is generated in each case for two or more accesses of the shielded space, in particular all accesses, namely by modifying a satellite signal, received in the region of the respective access, of a real satellite (CS1, CS2, CS3, CS4, CS5, CS6) of the cited satellite system (50) or of another real, existing satellite system (50), wherein within the scope of the modification, satellite data of the received satellite signal is extended in each case by the fictitious track and/or positioning data of the at least one fictitious satellite (TS, TS1, TS2, TS3).

4. Method according to one of the preceding claims,
wherein
the modification of the received satellite signal or signals comprises changing time stamps of the received satellite signals, in particular to take into account delays during the formation of the modified radio signals (Sm1, Sm2).

5. Method according to one of the preceding claims,
wherein
the modification of the satellite signal or signals comprises backdating the time stamps by the delay occurring during the modification and/or by an additional propagation time of the respective radio signal within the shielded space, compared with a direct line of sight between the mobile positioning facility and the respective satellite without shielding by the shielded space in the same position.

6. Method according to one of the preceding claims,
wherein
- the modified radio signals and the imitating radio signals (Sf, Sf1, Sf2, Sf3) are compatible with the satellite system or systems (50) and
- the mobile positioning facility could carry out a positioning outside of the shielded space on the basis of signals of this satellite system or these satellite systems (50).

7. Method according to one of the preceding claims,
wherein
- at least one satellite of the satellite system or of another real, existing satellite system is selected in each case for two or more accesses of the shielded space, which satellite - viewed along the longitudinal axis (A10) of the space in the region of the respective access
- lies around the longitudinal axis on the longitudinal axis (A10) and at least within a predetermined cone (41, 42) and
- a modified radio signal (Sm1, Sm2) is generated for the respective access in each case on the basis of the received satellite signal of the selected satellite.

8. Method according to one of the preceding claims, wherein
at least one satellite of the satellite system or of another real, existing satellite system is selected in each case for two or more accesses of the shielded space,
- by, viewed along the longitudinal axis (A10) of the space in the region of the respective access, a check being carried out starting with the respective longitudinal axis to determine whether a satellite is received and in the event of receipt, the respective satellite being selected for this access, and
- otherwise, the first receivable satellite of the satellite system being sought in a cone (41, 42), the apex of which lies in the region of the respective access, with an increasing cone angle, and after a receivable satellite has been found, this being selected for this access, and
a modified radio signal (Sm1, Sm2) being generated on the basis of the received satellite signal of the selected satellite for the respective access in each case.

9. Method according to one of the preceding claims, wherein
the fictitious satellite data of the at least one fictitious satellite (TS, TS1, TS2, TS3) is selected so that
- according to the fictitious satellite data this fictitious satellite is located above the shielded space, preferably in the apex, and/or
- would not be visible from any of the accesses, viewed outward from inside the space through the opening of the respective access.

10. Method according to one of the preceding claims, wherein
- the imitating radio signal or signals (Sf, Sf1, Sf2, Sf3) are generated along the shielded space with one or more antenna facilities, in particular leaky cables (20), installed in the shielded space, and/or
- a modified radio signal (Sm1, Sm2) is generated in each case for two or more accesses of the shielded space, said radio signal comprising the track and/or positioning data of the at least one fictitious satellite (TS, TS1, TS2, TS3), and the respective modified radio signal (Sm1, Sm2) is transmitted from the respective access into the shielded space with in each case one directional antenna.

11. Method according to one of the preceding claims,
wherein the shielded space is a tunnel (10) or a tunnel system, the accesses are tunnel mouths (11, 12) and the longitudinal axis of the space in the region of the respective tunnel mouth forms a tunnel axis.

12. Method according to one of the preceding claims,
wherein
- the satellite system (50) forms a global satellite-assisted positioning system.

13. Arrangement for generating signals which enable a positioning by a positioning facility disposed within a shielded space, wherein the arrangement has at least one infrastructure component (IK1, IK2, I1, I2, I3),
which is embodied
- to generate at least one imitating radio signal (Sf, Sf1, Sf2, Sf3), wherein each imitating radio signal imitates a satellite signal of a respective fictitious, in reality non-existent satellite (TS, TS1, TS2, TS3) and has fictitious satellite data of the fictitious satellite, and
- to generate at least one modified radio signal (Sm1, Sm2), namely by modifying a received satellite signal of a real satellite (CS1, CS2, CS3, CS4, CS5, CS6) of a real, existing satellite system, wherein within the scope of the modification, satellite data of the received satellite signal is extended by fictitious track and/or positioning data of the at least one fictious satellite (TS, TS1, TS2, TS3).

14. Arrangement according to claim 13,
wherein the arrangement has at least two infrastructure components (IK1, IK2, I1, I2, I3),
- which are embodied in each case to generate at least one modified radio signal (Sm1, Sm2), namely by modifying a received satellite signal of a real satellite (CS1, CS2, CS3, CS4, CS5, CS6) of a real, existing satellite system (50), wherein within the scope of the modification, satellite data of the received satellite signal is extended by fictitious track and/or positioning data of the at least one fictious satellite (TS, TS1, TS2, TS3), and
- of which at least one is embodied to generate at least one imitating radio signal (Sf, Sf1, Sf2, Sf3) within the meaning of claim 13.

15. Method for determining the position of a mobile GPS receiving facility in a tunnel, according to one of the preceding claims 1 to 12, wherein the tunnel is equipped with radio and computing components, which illuminate the tunnel with specially generated GPS radio signals using leaky cables and/or directional antennas, said GPS radio signals
a) supplying the tunnel (10) from each tunnel mouth with the data of at least one cross satellite which exists in reality as a GPS satellite, the data of which is determined by
- firstly the selection of the cross satellites taking place continuously on the basis of their position and direction in respect of the tunnel axis,
- secondly the original transmit time stamps being changed in the data of the cross satellites so that the processing time in the components and additional signal propagation times at the tunnel are balanced out,
- thirdly the track data of further satellites supplied together with the GPS signal of the cross satellites being extended by the track data of at least one tunnel satellite embodied as a virtual satellite and
- fourthly a GPS signal generated individually for each side being transmitted into the tunnel from each tunnel side,
b) supplying the tunnel with GPS radio signals of the tunnel satellite, the data of which is determined by the GPS data of a GPS satellite, which is located in orbit virtually in the apex above the tunnel, being generated and provided with current and highly accurate transmit time stamps, which take into account the satellite position, the processing time in the components and additional signal propagation times in the tunnel.

## Revendications

1. Procédé de production de signaux, qui permettent une localisation à un dispositif mobile de localisation se trouvant à l'intérieur d'un espace protégé,
dans lequel
- on produit au moins un signal (Sf, Sf1, Sf2, Sf3) radio d'imitation, chaque signal radio d'imitation imitant un signal satellite d'un satellite (TS, TS1, TS2, TS3) respectif fictif, n'existant pas réellement, et ayant des données fictives de satellite du satellite (TS, TS1, TS2, TS3) fictif,
- on produit au moins un signal (Sm1, Sm2) radio modifié et cela, par modification d'un signal de satellite reçu d'un satellite (CS1, CS2, CS3, CS4, CS5, CS6) réel d'un système (50) de satellites existant réellement, dans lequel dans le cadre de la modification, on complète des données de satellite du signal de satellite reçu de données fictives de trajectoire et/ou de position du au moins un satellite (TS, TS1, TS2, TS3) fictif, et
- on injecte le au moins un signal (Sf, Sf1, Sf2, Sf3) radio d'imitation et le au moins un signal (Sm1, Sm2) radio modifié dans l'espace protégé.

2. Procédé suivant la revendication 1,
dans lequel
- on considère le au moins un satellite (TS, TS1, TS2, TS3) fictif comme géostationnaire et il a des données de position invariable dans le temps, et
- on complète les données de satellite du signal reçu de satellite des données de position invariables dans le temps du satellite (TS, TS1, TS2, TS3) géostationnaire fictif.

3. Procédé suivant l'une des revendications précédentes,
dans lequel
on produit pour deux ou plusieurs accès de l'espace protégé, en particulier pour tous les accès, respectivement au moins un signal (Sm1, Sm2) radio modifié, et cela par modification d'un signal de satellite, reçu dans la partie de l'accès respectif, d'un satellite (CS1, CS2, CS3, CS4, CS5, CS6) réel dudit système (50) de satellites ou d'un autre système (50) de satellites existant réellement, dans lequel dans le cadre de la modification, on complète des données de satellite du signal reçu de satellite respectivement des données fictives de trajectoire et/ou de position du au moins un satellite (TS, TS1, TS2, TS3) fictif.

4. Procédé suivant l'une des revendications précédentes,
dans lequel
la modification du ou des signaux reçus de satellites comprend la modification d'estampilles temporelles des signaux reçus de satellites pour tenir compte en particulier de retards lors de la formation des signaux (Sm1, Sm2) radio modifiés.

5. Procédé suivant l'une des revendications précédentes,
dans lequel
la modification du ou des signaux reçus de satellites comprend le rétrodatage de l'estampille temporelle du retard se produisant pendant la modification et/ou d'un temps de parcours supplémentaire du signal radio respectif à l'intérieur de l'espace protégé - comparé à une liaison en visibilité directe entre le dispositif mobile de localisation et le satellite respectif sans protection par l'espace protégé pour une même position -

6. Procédé suivant l'une des revendications précédentes,
dans lequel
- les signaux radio modifiés et les signaux (Sf, Sf1, Sf2, Sf3) radio d'imitation sont compatibles avec le ou les systèmes (50) de satellites, et
- le dispositif mobile de localisation pourrait effectuer une localisation à l'extérieur de l'espace protégé sur la base de signaux de ce ou de ces systèmes (50) de satellites.

7. Procédé suivant l'une des revendications précédentes,
dans lequel
- on choisit pour deux ou plusieurs accès de l'espace protégé respectivement au moins un satellite du système de satellites ou d'un autre système de satellites existant réellement, qui - considéré sur l'axe (A10) longitudinal de l'espace dans la partie de l'accès respectif - se trouve sur l'axe (A10) longitudinal et au moins à l'intérieur d'un cône (41, 42) donné à l'avance autour de l'axe longitudinal, et
- pour l'accès respectif, on produit respectivement un signal (Sm1, Sm2) radio modifié sur la base du signal de satellite reçu du satellite choisi.

8. Procédé suivant l'une des revendications précédentes,
dans lequel
pour deux ou plusieurs accès de l'espace protégé, on choisit respectivement au moins un satellite du système de satellites ou d'un autre système de satellites existant réellement,
- en contrôlant en commençant par l'axe longitudinal respectif - considéré suivant l'axe (A10) longitudinal de l'espace dans la partie de l'accès respectif - si on reçoit un satellite et, dans le cas d'une réception, on choisit le satellite respectif pour cet accès, et
- sinon, dans un cône (41, 42), dont la pointe du cône se trouve dans la partie de l'accès respectif, on recherche par un angle de cône croissant le premier satellite pouvant être reçu du système de satellites et, après avoir trouvé un satellite pouvant être reçu, on choisit celui-ci pour cet accès, et
- pour l'accès respectif, on produit respectivement un signal (Sm1, Sm2) radio modifié sur la base du signal de satellite reçu du satellite choisi.

9. Procédé suivant l'une des revendications précédentes,
dans lequel
on choisit les données fictives de satellite du au moins un satellite (TS, TS1, TS2, TS3) fictif de manière à ce que
- celui-ci se trouve suivant les données de satellite fictives au-dessus de l'espace protégé, de préférence au zénith, et/ou
- ne serait visible d'aucun des accès - considéré de l'espace intérieur à l'extérieur par l'ouverture de l'accès respectif.

10. Procédé suivant l'une des revendications précédentes,
dans lequel
- on produit le ou les signaux (Sf, Sf1, Sf2, Sf3) radio d'imitation le long de l'espace protégé par un ou par plusieurs dispositifs à antenne installés dans l'espace protégé, en particulier par des câbles (20) à fente, et/ou
- pour deux ou plusieurs accès de l'espace protégé, on produit respectivement un signal (Sm1, Sm2) radio modifié, qui comprend les données de trajectoire et/ou de position du au moins un satellite (TS, TS1, TS2, TS3) fictif et on envoie, par respectivement une antenne directionnelle, le signal (Sm1, Sm2) radio modifié respectif de l'accès respectif à l'espace protégé.

11. Procédé suivant l'une des revendications précédentes,
dans lequel
l'espace protégé est un tunnel (10) ou un système de tunnel, les accès sont des débouchés (11, 12) de tunnel et l'axe longitudinal de l'espace dans la partie du débouché respectif du tunnel forme un axe du tunnel.

12. Procédé suivant l'une des revendications précédentes,
dans lequel
- le système (50) de satellites forme un système global de détermination de position assisté par satellite.

13. Dispositif de production de signaux, qui permettent une localisation à un dispositif mobile de localisation se trouvant à l'intérieur d'un espace protégé,
dans lequel le dispositif a au moins un composant (IK1, IK2, I1, I2, I3) d'infrastructure,
qui est constitué pour
- produire au moins un signal (Sf, Sf1, Sf2, Sf3) radio d'imitation, dans lequel chaque signal radio d'imitation imite un signal de satellite d'un satellite (TS, TS1, TS2, TS3) respectif fictif n'existant pas réellement et a des données fictives de satellite du satellite fictif, et
- pour produire au moins un signal (Sm1, Sm2) radio modifié, et cela par modification d'un signal reçu de satellite d'un satellite (CS1, CS2, CS3, CS4, CS5, CS6) réel d'un système de satellites existant réellement, dans lequel dans le cadre de la modification, on complète des données de satellite du signal reçu de satellite de données fictives de trajectoire et/ou de position du au moins un satellite (TS, TS1, TS2, TS3) fictif.

14. Dispositif suivant la revendication 13,
dans lequel le dispositif
a au moins deux composants (IK1, IK2, I1, I2, I3) d'infrastructure,
- qui sont constitués respectivement, pour produire au moins un signal (Sm1, Sm2) radio modifié, et cela par modification d'un signal reçu de satellite d'un satellite (CS1, CS2, CS3, CS4, CS5, CS6) réel d'un système (50) de satellites existant réellement, dans lequel dans le cadre de la modification, on complète des données de satellite du signal reçu de satellite de données fictives de trajectoire et/ou de position du au moins un satellite (TS, TS1, TS2, TS3) fictif, et
- dont l'un au moins est constitué, pour produire au moins un signal (Sf, Sf1, Sf2, Sf3) radio d'imitation au sens de la revendication 13.

15. Procédé de détermination de la position locale d'un dispositif mobile de réception GPS dans un tunnel suivant l'une des revendications 1 à 12 précédentes, dans lequel on équipe le tunnel de composants en technique radio et en technique informatique, qui couvrent le tunnel, au moyen de câbles à fente et/ou d'antennes directionnelles, de signaux radio GPS produits spécialement, qui
a) alimente le tunnel (10) par chaque débouché du tunnel en les données d'au moins un satellite cross présent réellement comme satellite GPS, dont on détermine les données en
- premièrement effectuant le choix du satellite cross, en continu à l'aide de sa position et sa direction par rapport à l'axe du tunnel,
- deuxièmement modifiant l'estampille temporelle d'émission originale dans les données du satellite cross,
de manière à compenser le temps de traitement dans le composant et les temps de parcours supplémentaires du signal dans le tunnel,
- troisièmement en complétant les données de trajectoire, fournies dans le signal GPS du satellite cross, d'autres satellites des données de trajectoire d'au moins un satellite de tunnel réalisé en satellite virtuel et
- quatrièmement en envoyant dans le tunnel de chaque côté du tunnel un signal GPS produit individuellement par côté,
b) alimente le tunnel en signaux radio GPS du satellite de tunnel, dont on détermine les données en produisant les données GPS d'un satellite GPS, qui se trouve dans l'orbite virtuellement au zénith au-dessus du tunnel et en les munissant d'estampilles temporelles d'émission en cours et très précises, qui prennent en compte la position du satellite, le temps de traitement dans le composant et des temps de parcours supplémentaires du signal dans le tunnel.
